(19) Europäisches Patentamt
European Patent Office
Office européen des brevets

(11) **EP 3 511 126 A1**

(12) **EUROPÄISCHE PATENTANMELDUNG**

(43) Veröffentlichungstag:
**17.07.2019 Patentblatt 2019/29**

(51) Int Cl.:
***B25J 9/16*** (2006.01)

(21) Anmeldenummer: **18151618.8**

(22) Anmeldetag: **15.01.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD TN**

(71) Anmelder: **Siemens Aktiengesellschaft 80333 München (DE)**

(72) Erfinder: **Schmitt, Philipp Sebastian 81735 München (DE)**

(54) **VERFAHREN ZUR RECHNERGESTÜTZTEN PLANUNG EINES DURCH EINEN ROBOTER AUSFÜHRBAREN ARBEITSABLAUFS**

(57)    Die Erfindung betrifft ein Verfahren zur rechnergestützten Planung eines durch einen Roboter (1, 2) ausführbaren Arbeitsablaufs (PA) zur Erfüllung einer Arbeitsaufgabe (TA), wobei ein Zustand (x) des Roboters (1, 2) durch dessen Bewegungen veränderbar ist und zu einem jeweiligen Zeitpunkt (t) in einem Zustandsraum durch eine Konfiguration (c) und einen Arbeitspunkt (o) beschrieben wird, wobei die Konfiguration (c) die räumliche Lage einer Mehrzahl von Roboterachsen und zumindest die erste zeitliche Ableitung der räumlichen Lage (x) umfasst und der Arbeitspunkt (o) einen diskreten Arbeitszustand des Roboters (1, 2) in Bezug auf die Arbeitsaufgabe (TA) angibt. Die Arbeitsaufgabe (TA) ist durch einen Startzustand ($x_{start}$) des Roboters (1, 2) sowie eine Menge an Zielzuständen ($X_{goal}$) des Roboters (1, 2) gegeben und für benachbarte Arbeitspunkte (o) sind Manipulationen des Roboters (1, 2) definiert, welche die Veränderung seines Zustands (x) direkt zwischen zwei benachbarten Arbeitspunkten ermöglichen. Das erfindungsgemäße Verfahren zeichnet sich dadurch aus, dass über die probabilistische Auswahl von Zuständen (x) ein Pfad aus Trajektorien $\left( u_{t1}^{t2} \right)$ bestimmt wird, der die Arbeitsaufgabe (TA) erfüllt. Dabei werden auch Übergänge von Zuständen (x) zwischen benachbarten Arbeitspunkten (o) zugelassen. Das Verfahren ermöglicht auf diese Weise eine kinodynamische Planung, welche auch symbolische Zustände in der Form von diskreten Arbeitszuständen des Roboters in Bezug auf die Arbeitsaufgabe berücksichtigt.

FIG 3

**Beschreibung**

Die Erfindung betrifft ein Verfahren zur rechnergestützten Planung eines durch einen Roboter ausführbaren Arbeitsablaufs sowie eine entsprechende Vorrichtung. Ferner betrifft die Erfindung ein Computerprogrammprodukt und ein Computerprogramm.

Um mittels eines Roboters komplexe, mehrstufige Manipulationsaufgaben durchzuführen, müssen seine Bewegungen und andere Aktionen vorab berechnet werden.

Um die Bewegung eines Roboters automatisch zu berechnen, sind aus dem Stand der Technik Bewegungsplaner bekannt, welche neben der Kollisionsfreiheit der Bewegung auch die begrenzte Bewegungsdynamik des Roboters sowie ggf. Optimalitätskriterien berücksichtigen. Solche Planer werden auch als kinodynamische Bewegungsplaner bezeichnet.

Bewegungsplaner eignen sich nicht zur kombinierten Aufgaben- und Bewegungsplanung, bei der neben Bewegungen auch Manipulationen des Roboters zu berücksichtigen sind. Für die kombinierte Aufgaben- und Bewegungsplanung gibt es zwar ebenfalls Planer, die jedoch lange Rechenzeiten aufweisen oder problemspezifische Heuristiken erfordern, um effizient zu arbeiten.

In dem Dokument [1] wird ein kinodynamischer Bewegungsplaner beschrieben, der im Folgenden auch als EST-Algorithmus bezeichnet wird. Bei diesem Planer wird ausgehend von einem Startzustand des Roboters iterativ ein Baum von Knoten und Kanten in der Form von Zuständen und Bewegungstrajektorien des Roboters aufgebaut. Dabei wird in jedem Schritt ein Knoten des bisherigen Baums zufällig ausgewählt und eine zufällige Trajektorie zur Weiterbewegung des Roboters erzeugt. Dieser Planer berücksichtigt nur die Bewegung des Roboters, ohne dass sog. symbolische Zustände bzw. Moden einfließen, die Arbeitspunkte des Roboters in Bezug auf eine zu erfüllende Arbeitsaufgabe angeben.

In dem Dokument [2] wird ein Verfahren beschrieben, das im Folgenden auch als AO-x Meta-Algorithmus bezeichnet wird. In diesem Verfahren wird ein kinodynamischer Bewegungsplaner verwendet, um in Bezug auf ein Optimalitätskriterium optimal zu planen. Auch der AO-x Meta-Algorithmus berücksichtigt keine symbolischen Zustände bzw. Moden.

Aufgabe der Erfindung ist es, ein Verfahren zur rechnergestützten Planung eines durch einen Roboter ausführbaren Arbeitslaufs zu schaffen, welches auf einem kinodynamischen Bewegungsplaner basiert und ferner symbolische Zustände des Roboters berücksichtigt.

Diese Aufgabe wird durch das Verfahren gemäß Patentanspruch 1 bzw. die Vorrichtung gemäß Patentanspruch 11 bzw. das Computerprogrammprodukt gemäß Patentanspruch 14 bzw. das Computerprogramm gemäß Patentanspruch 15 gelöst. Weiterbildungen der Erfindung sind in den abhängigen Ansprüchen definiert.

Das erfindungsgemäße Verfahren dient zur rechnergestützten Planung eines durch einen Roboter ausführbaren Arbeitsablaufs zur Erfüllung einer Arbeitsaufgabe. Hier und im Folgenden ist der Begriff des Roboters weit zu verstehen. Ein Roboter kann eine beliebige robotische Einrichtung mit einem oder mehreren robotischen Einheiten darstellen, mit der eine entsprechende Arbeitsaufgabe durchgeführt werden soll.

Im erfindungsgemäßen Verfahren wird ein Zustand des Roboters, der durch dessen Bewegungen veränderbar ist, zu einem jeweiligen Zeitpunkt in einem Zustandsraum durch eine Konfiguration und einen Arbeitspunkt beschrieben. Die Konfiguration umfasst die räumliche Lage einer Mehrzahl von Roboterachsen und zumindest die erste zeitliche Ableitung der räumlichen Lage.

Hierdurch wird die Bewegungsdynamik des Roboters berücksichtigt. Zusätzlich zu der ersten Ableitung (d.h. der Geschwindigkeit) können ggf. auch die zweite und weiteren Ableitungen in der Konfiguration enthalten sein.

Im Unterschied zur Konfiguration stellt ein Arbeitspunkt des Roboters einen diskreten Arbeitszustand in Bezug auf die Arbeitsaufgabe dar. Die Arbeitsaufgabe ist dabei durch einen Startzustand des Roboters sowie eine Menge von Zielzuständen des Roboters gegeben. Ferner sind für benachbarte Arbeitspunkte Manipulationen des Roboters definiert, welche die Veränderung seines Zustands direkt zwischen zwei benachbarten Arbeitspunkten (d.h. ohne Zwischenschaltung weiterer Arbeitspunkte) ermöglichen. Mit anderen Worten bestehen Nachbarschaftsbeziehungen zwischen den Arbeitspunkten, wobei mittels vorgegebener Manipulationen zwischen entsprechenden benachbarten Arbeitspunkten gewechselt werden kann und hierdurch der Arbeitszustand des Roboters in Bezug auf die Arbeitsaufgabe verändert werden kann.

Ein Arbeitszustand kann beispielsweise dadurch gegeben sein, dass ein Objekt durch den Roboter gegriffen ist, wobei eine Manipulation zum Wechsel in diesen Arbeitszustand darin besteht, dass der Roboter das entsprechende Objekt greift. Vor dem Greifen des Objekts liegt ein Arbeitszustand vor, bei dem sich das Objekt an einer anderen Position als im Greifer des Roboters befindet.

Im Rahmen des erfindungsgemäßen Verfahrens wird ein oder mehrere Male eine Iteration durchgeführt, wobei der geplante Arbeitsablauf, der das Ergebnis des erfindungsgemäßen Verfahrens darstellt, aus einem Arbeitsablauf erhalten wird, der durch die oder eine der Iterationen bestimmt wird. In einer Variante der Erfindung entspricht der geplante Arbeitsablauf dabei dem durch die entsprechende Iteration bestimmten Arbeitsablauf. Nichtsdestotrotz kann der geplante Arbeitsablauf auch dadurch erhalten werden, dass der durch die Iteration bestimmte Arbeitsablauf einer Nachverarbeitung, z.B. einer lokalen Optimierung und insbesondere einer Glättung, unterzogen wird.

Eine im erfindungsgemäßen Verfahren durchgeführte Iteration wird mit dem Startzustand als gewonnenen Zustand des Roboters initialisiert. Die Iteration führt in der jeweiligen Iterationsschleife die nachfolgend beschriebenen Schritte durch.

In einem Schritt i) wird aus allen durch frühere Iterationsschleifen gewonnenen Zuständen des Roboters probabilistisch ein Zustand ausgewählt. Hier und im Folgenden ist unter dem Begriff "probabilistisch" eine nicht-deterministische Bestimmung zu verstehen, z.B. basierend auf einer entsprechenden Wahrscheinlichkeitsverteilung. Die Wahrscheinlichkeitsverteilung kann unterschiedlich gewählt sein und in bestimmten Fällen auch eine Gleichverteilung darstellen.

In einem Schritt ii) wird wiederum probabilistisch eine zulässige Trajektorie der Bewegung des Roboters ausgehend von der Konfiguration des ausgewählten Zustands hin zu einer Konfiguration in einem neuen Zustand bestimmt, wobei der neue Zustand entweder den gleichen Arbeitspunkt wie der ausgewählte Zustand oder einen benachbarten Arbeitspunkt aufweist und wobei notwendige Bedingungen für die Zulässigkeit der Trajektorie darin bestehen, dass die Trajektorie eine kollisionsfreie Bewegung des Roboters beschreibt und gemäß einer vorgegebenen Bewegungsdynamik des Roboters möglich ist. Die vorgegebene Bewegungsdynamik beschreibt die dynamischen Grenzen der Bewegung des Roboters. Die vorgegebene Bewegungsdynamik kann beispielsweise über eine Funktion angegeben werden, welche in Abhängigkeit von der aktuellen Konfiguration und einer Steuereingabe die erste zeitliche Ableitung der Konfiguration angibt.

In einer bevorzugten Variante stellen die obigen notwendigen Bedingungen auch hinreichende Bedingungen für die Zulässigkeit einer Trajektorie dar. In einer weiteren bevorzugten Variante wird der obige Schritt ii) derart durchgeführt, dass zunächst probabilistisch eine Trajektorie bestimmt wird und anschließend die Zulässigkeitsbedingungen überprüft werden. Vorzugsweise erfüllt die probabilistisch bestimmte Trajektorie dabei bereits die Bedingung in Bezug auf die vorgegebene Bewegungsdynamik, so dass nur die Bedingung der Kollisionsfreiheit überprüft werden muss. Sollte die Trajektorie gemäß den Zulässigkeitsbedingungen nicht zulässig sein, wird probabilistisch eine neue Trajektorie bestimmt, bis eine zulässige Trajektorie gefunden wird.

In einem Schritt iii) der jeweiligen Iterationsschleife wird ermittelt, ob der neue Zustand in der Menge der Zielzustände liegt, wobei im Falle, dass der neue Zustand nicht in der Menge der Zielzustände liegt, der neue Zustand als ein durch die jeweilige Iterationsschleife gewonnener Zustand festgelegt wird und zu nächsten Iterationsschleife übergegangen wird. Demgegenüber wird im Falle, dass der neue Zustand in der Menge der Zielzustände liegt, die Iteration mit der Bestimmung eines Arbeitsablaufs beendet, der aus dem Pfad erhalten wird, der mittels der Iteration bestimmte zulässige Trajektorien umfasst und vom Startzustand zum neuen Zustand in der Menge der Zielzustände führt. In einer Variante kann der Arbeitsablauf dabei diesem Pfad entsprechen, jedoch kann er aus diesem Pfad auch mittels einer Nachverarbeitung, z.B. einer lokalen Optimierung und insbesondere einer Glättung, gewonnen sein.

Das erfindungsgemäße Verfahren zeichnet sich dadurch aus, dass über eine probabilistische Suche ein Arbeitsablauf zur Erfüllung einer Arbeitsaufgabe ermittelt wird, wobei bei der Suche auch ein Wechsel zwischen Arbeitspunkten zugelassen wird. Auf diese Weise wird eine kinodynamische Planung geschaffen, welche auch symbolische Zustände geeignet berücksichtigt.

In einer bevorzugten Variante ist ein Abbruchkriterium für das erfindungsgemäße Verfahren festgelegt, welches insbesondere durch den Ablauf einer vorgegebenen Zeitspanne gegeben ist. Auf diese Weise wird sichergestellt, dass das Verfahren im Falle, dass kein Arbeitsablauf gefunden werden kann, nicht auf unbestimmte Zeit weiterläuft.

In einer Ausführungsform des erfindungsgemäßen Verfahrens wird bei der erstmaligen Beendigung einer Iteration der geplante Arbeitsablauf aus dem Arbeitsablauf erhalten, der durch die Iteration bestimmt ist, wobei das Verfahren anschließend beendet wird. Hierdurch kann eine kurze Laufzeit des rechnergestützten Verfahrens erreicht werden.

In einer anderen Variante der Erfindung wird die Iteration mehrmals durchgeführt, indem eine beendete Iteration neu gestartet wird, wobei basierend auf einem Optimierungsziel von niedrigen Kosten der durch die Iterationen bestimmten Arbeitsabläufe gemäß einer Kostenfunktion der geplante Arbeitsablauf aus demjenigen Arbeitsablauf mit den niedrigsten Kosten erhalten wird.

In einer bevorzugten Variante ist die obige Kostenfunktion derart ausgestaltet, dass eine kürzere Ausführungszeit eines Pfads zwischen zwei Zuständen des Roboters zu niedrigeren Kosten führt.

Um die Kostenfunktion im Rahmen der im erfindungsgemäßen Verfahren durchgeführten Iteration geeignet zu berücksichtigen, ist in einer bevorzugten Ausführungsform eine Trajektorie in Schritt ii) der Iteration dann zulässig, wenn neben den notwendigen Bedingungen die Bedingung erfüllt ist, dass der Pfad, der die in der aktuellen Iterationsschleife bestimmte Trajektorie und von in früheren Iterationsschleifen bestimmte zulässige Trajektorien umfasst und von dem Startzustand zu dem neuen Zustand führt, niedrigere Kosten als der in der vorhergehenden Iterationsschleife bestimmte Arbeitsablauf aufweist. Die Iteration wird dabei mit einem vorgegebenen Kostenwert initialisiert, der vorzugsweise auf unendlich gesetzt ist. Die soeben beschriebene weitere Zulässigkeitsbedingung von geringen Pfadkosten kann im Schritt ii) überprüft werden.

In einer weiteren, besonders bevorzugten Ausführungsform ist die probabilistische Auswahl des Zustands des Roboters in Schritt i) derart ausgestaltet, dass die Wahrscheinlichkeit der Auswahl eines Zustands aus einer Region im Zustandsraum mit abnehmender Dichte von in vorhergehenden Iterationsschleifen gewonnenen Zuständen in der Region zunimmt. Hierdurch wird sichergestellt, dass auch dünn besetzte Bereiche im Zustandsraum erreicht werden.

In einer weiteren Variante der Erfindung werden zu Beginn des Verfahrens gleichzeitig mehrere Iterationen gestartet, wobei dann, wenn eine Iteration erstmalig beendet wird, alle restlichen, gleichzeitig gestarteten Iterationen verworfen werden. Hierdurch wird das schnellere Auffinden eines ausführbaren Arbeitsablaufs durch das erfindungsgemäße Verfahren erreicht.

In einer besonders bevorzugten Ausführungsform wird in Schritt ii) probabilistisch eine erste Trajektorie bestimmt, die von der Konfiguration des ausgewählten Zustands zu der Konfiguration eines Zustands mit dem gleichen Arbeitspunkt wie der ausgewählte Zustand führt. Ferner wird probabilistisch für jeden Arbeitspunkt, der zum Arbeitspunkt des ausgewählten Zustands benachbart ist, eine zweite Trajektorie bestimmt, die von der Konfiguration des ausgewählten Zustands zu einer Konfiguration eines Zustands umfassend den jeweiligen benachbarten Arbeitspunkt führt, wobei aus der Menge der ersten Trajektorie und der zweiten Trajektorie oder Trajektorien probabilistisch eine Trajektorie ausgewählt wird, welche die im Schritt ii) bestimmte Trajektorie vor Überprüfung ihrer Zulässigkeit darstellt. Vorzugsweise ist die Auswahl aus diesen Trajektorien dabei eine Gleichverteilung, wodurch sichergestellt wird, dass neue Arbeitspunkte regelmäßig erreicht werden.

In einer bevorzugten Ausgestaltung der oben beschriebenen Ausführungsform läuft die Bestimmung einer zweiten Trajektorie (d.h. einer Trajektorie hin zu einem benachbarten Arbeitspunkt) derart ab, dass mittels eines inversen kinematischen Lösers, wie z.B. eines numerischen oder analytischen inversen kinematischen Lösers, probabilistisch eine Konfiguration des Roboters bestimmt wird, von der ein Wechsel von dem Arbeitspunkt des ausgewählten Zustands in den benachbarten Arbeitspunkt mittels einer Manipulation möglich ist. Anschließend wird eine Trajektorie von der Konfiguration des ausgewählten Zustands zu der mittels des inversen kinematischen Lösers bestimmten Konfiguration ermittelt, wobei diese ermittelte Trajektorie zusammen mit der Manipulation die zweite Trajektorie darstellt.

Neben dem oben beschriebenen Verfahren betrifft die Erfindung eine Vorrichtung zur rechnergestützten Planung eines durch einen Roboter ausführbaren Arbeitsablaufs, wobei die Vorrichtung ein Rechnermittel zur Durchführung des erfindungsgemäßen Verfahrens bzw. einer oder mehrerer bevorzugter Varianten des erfindungsgemäßen Verfahrens umfasst.

Darüber hinaus betrifft die Erfindung einen Roboter, der die erfindungsgemäße Vorrichtung beinhaltet, um einen durch den Roboter ausführbaren Arbeitsablaufs zu planen. Der Roboter kann somit online den Arbeitsablauf für die von ihm zu erfüllende Arbeitsaufgabe berechnen und diesen Arbeitsablauf anschließend ausführen.

Ferner umfasst die Erfindung ein Computerprogrammprodukt mit einem auf einem maschinenlesbaren Träger gespeicherten Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird. Die Erfindung betrifft darüber hinaus ein Computerprogramm mit einem Programmcode zur Durchführung des erfindungsgemäßen Verfahrens bzw. einer oder mehrerer bevorzugter Varianten des erfindungsgemäßen Verfahrens, wenn der Programmcode auf einem Computer ausgeführt wird.

Ausführungsbeispiele der Erfindung werden nachfolgend anhand der beigefügten Figuren detailliert beschrieben.

Es zeigen:

Fig. 1  eine schematische Darstellung eines Szenarios, welches einen Anwendungsfall der erfindungsgemäßen Planung eines Arbeitsablaufs verdeutlicht;

Fig. 2  ein Ablaufdiagramm, das die Durchführung einer Ausführungsform des erfindungsgemäßen Verfahrens wiedergibt; und

Fig. 3  eine schematische Darstellung, welche die erfindungsgemäße Bestimmung von Trajektorien zur Ermittlung eines Arbeitsablaufs im Rahmen des erfindungsgemäßen Verfahrens verdeutlicht.

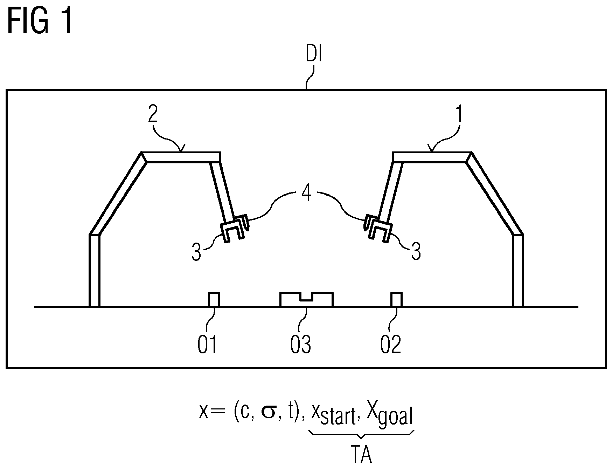

Fig. 1 zeigt in dem darin enthaltenen Diagramm DI beispielhaft einen Roboter bestehend aus zwei Roboterarmen 1 und 2, für den automatisch ein Arbeitsablauf zur Durchführung einer Arbeitsaufgabe mit dem erfindungsgemäßen Verfahren geplant werden soll. Jeder der beiden Roboterarme 1 und 2 umfasst am vorderen Ende einen Greifer 3 sowie eine dort angeordnete Kamera 4, um Objekte O1, O2 und O3, die sich auf einer entsprechenden Arbeitsfläche zwischen den beiden Roboterarmen befinden, zu erfassen und zu greifen. Eine Implementierung des erfindungsgemäßen Verfahrens wurde anhand dieses Szenarios getestet und lieferte gute Ergebnisse, wie weiter unten noch näher erläutert wird. Eine Arbeitsaufgabe, die dabei mittels des erfindungsgemäßen Verfahrens geplant wurde, bestand darin, sowohl das Objekt O1 als auch das Objekt O2 mittels der Roboterarme in einer Schiene des Objekts O3 zu positionieren. Im Rahmen der Durchführung der Arbeitsaufgabe wurden die einzelnen Objekte zunächst über die Kameras 4 lokalisiert und anschließend wurde der Arbeitsablauf derart durchgeführt, dass die Objekte O1 und O2 durch die Roboterarme gegriffen wurden und in die Schiene des Objekts O3 positioniert wurden. Dabei war es zulässig, dass sich die Roboterarme gegenseitig Objekte übergeben.

Im Rahmen der erfindungsgemäßen Berechnung eines Arbeitsablaufs, mit dem die Arbeitsaufgabe über die Roboterarme 1 und 2 durchführbar ist, werden Zustände x des Roboters betrachtet, welche zu jeweiligen Zeitpunkten t durch eine Konfiguration c sowie einen Arbeitspunkt $\sigma$ gegeben sind. Die Konfiguration c beschreibt dabei die räumliche Lage (sog. Pose) der Achsen der beiden Roboterarme. Es wurden Roboterarme mit jeweils sieben Achsen verwendet, was aus der schematischen Darstellung der Fig. 1 nicht erkennbar ist. Ferner beschreibt eine Konfiguration die jeweiligen ersten Ableitungen der einzelnen Posen der Roboterachsen nach der Zeit, d.h. die jeweiligen Geschwindigkeiten. Im hier betrachteten Beispiel wurden nur die Lagen der Achsen sowie deren Geschwindigkeiten betrachtet. Gegebenenfalls kann die Konfiguration jedoch auch höhere zeitliche Ableitungen umfassen.

Im Unterschied zur Konfiguration c beschreibt der Arbeitspunkt $\sigma$, der häufig auch als symbolischer Zustand bezeichnet wird, einen diskreten Zustand des Roboters, der im Zusammenhang mit der Ausführung der Arbeitsaufgabe steht. In dem Beispiel der Fig. 1 sind solche Arbeitspunkte durch die Beziehung der Roboterarme 1 und 2 zu den Objekten O1, O2 und O3 gegeben. Zum Beispiel kann ein Arbeitspunkt dadurch beschrieben sein, dass das Objekt O1 durch beide Roboterarme mittels der Kameras lokalisiert ist und durch einen der Roboterarme gegriffen ist, das Objekt O2 durch beide Roboterarme mittels der Kameras lokalisiert ist und sich bereits auf dem Objekt O3 befindet und das Objekt O3 durch beide Roboterarme mittels der Kameras lokalisiert ist und sich auf der Arbeitsfläche befindet.

Ein anderer Arbeitspunkt, der in dem Szenario des Diagramms DI gerade angedeutet wird, ist dadurch gegeben, dass alle Objekte O1, O2 und O3 durch beide Roboterarme mittels ihrer Kameras lokalisiert sind und sich auf der Arbeitsfläche befinden. Die konkrete Definition von Arbeitspunkten ist abhängig von der betrachteten Arbeitsaufgabe und die Festlegung solcher Arbeitspunkte ist dem Fachmann an sich bekannt bzw. liegt in Abhängigkeit von der Arbeitsaufgabe im Rahmen von fachmännischem Handeln.

Zur rechnergestützten Verarbeitung der Arbeitsaufgabe ist diese durch einen Startzustand $x_{start}$ des Roboters sowie durch eine Menge von Zielzuständen gegeben, wobei diese Menge in Fig. 1 mit $X_{goal}$ bezeichnet ist. Diese beiden Größen bilden die Arbeitsaufgabe, welche in Fig. 1 mit TA bezeichnet ist. Dabei ist zu beachten, dass zur Erfüllung der Arbeitsaufgabe in der Regel immer viele unterschiedliche Endzustände des Roboters möglich sind. Zum Beispiel ist es für die Erfüllung der oben beschriebenen Arbeitsaufgabe der Anordnung beider Objekte O1 und O2 in der Schiene des Objekts O3 unbeachtlich, an welchen Positionen sich die Roboterarme befinden, nachdem beide Objekte O1 und O2 auf dem Objekt O3 abgelegt wurden.

Im Folgenden wird eine konkrete Implementierung des erfindungsgemäßen Verfahrens erläutert. Ausgangspunkt des Verfahrens ist ein multi-modales Planungsproblem. Das Planungsproblem besteht dabei nicht rein darin, die Bewegung des Roboters zu spezifizieren, sondern es soll auch eine bestimmte Arbeitsaufgabe durchgeführt werden.

Ausgangspunkt des Verfahrens ist der bereits erwähnte Zustand $x$ in einem entsprechenden Zustandsraum $X$. Dieser Zustand wird durch das Tripel $x = (c, \sigma, t)$ beschrieben. Die Komponenten dieses Tripels werden im Folgenden auch als $x.c, x.\sigma$ und $x.t$ bezeichnet. Das Tripel enthält die Konfiguration $c \in C \subset \mathbb{R}^n$, die bereits weiter oben beschrieben wurde. Diese Konfiguration beschreibt die Positionen der Roboterachsen sowie die gemäß der betrachteten Problemstellung nötigen Ableitungen nach der Zeit, wobei zumindest die ersten Ableitungen Bestandteil der Konfiguration sind. Betrachtet man beispielsweise einen beschleunigungs-gesteuerten Roboter aus k Roboterachsen, gibt es insgesamt k Achspositionen und k zugeordnete Geschwindigkeiten. Jedes der Elemente aus der Konfiguration c weist eine obere und untere Grenze auf.

Der Arbeitspunkt $\sigma \in \Sigma$ wurde bereits oben erwähnt und beschreibt einen Arbeitszustand des Roboters im Rahmen der Durchführung der entsprechenden Arbeitsaufgabe. Dieser Arbeitspunkt wird auch als symbolischer Zustand bzw. Mode bezeichnet. Die Gesamtanzahl der Moden im Raum $\Sigma$ ist endlich, kann jedoch sehr groß sein. Ein jeweiliger Zustand x enthält ferner den Zeitpunkt t, der in einem Intervall zwischen 0 und einer vorgegebenen Maximalzeit $T_{max}$ liegt, wobei diese Maximalzeit die maximal zulässige Dauer für die Durchführung der entsprechenden Arbeitsaufgabe angibt.

Die dynamische zeitliche Entwicklung $\dot{c}$ (d.h. die erste zeitliche Ableitung) der Roboterkonfiguration c ist durch eine sog. Kontrolleingabe $u \in U$ gegeben, d.h. es gilt:

$$\dot{c} = f(c, u)$$

Durch diese dynamische zeitliche Entwicklung ist die Bewegungsdynamik des Roboters vorgegeben. Ein Arbeitszustand $\sigma$ bleibt solange konstant, bis die Roboterkonfiguration $c_1$ einen Transitionsbereich $C_{\sigma 1, \sigma 2}$ erreicht. In

diesem Transitionsbereich ist eine Transition von dem Arbeitspunkt $\sigma_1$ zum Arbeitspunkt $\sigma_2$ möglich. Eine Transition wird dabei durch eine vorbekannte Manipulation des Roboters, wie z.B. dem Greifen eines Objekts, bewirkt. Innerhalb eines Transitionsbereichs kann somit ein Roboterzustand $x_1 = (c_1, \sigma_1, t_1)$ zu dem neuen Roboterzustand $x_2 = T_{\sigma1,\sigma2}(x_1)$ wechseln. In der Regel sind die Transitionsbereiche $C_{\sigma1,\sigma2}$ niedrig dimensionale Mannigfaltigkeiten des Konfigurationsraums $C$ und sie sind für die meisten Paare von $\sigma_1,\sigma_2 \in \Sigma$ leer. Ein Satz von benachbarten Arbeitspunkten $N_\sigma$ eines Arbeitspunkts $\sigma$ enthält alle Arbeitspunkte $\sigma'$, für welche der Transitionsbereich $C_{\sigma,\sigma'}$ nicht leer ist. Eine Manipulation wechselt direkt zwischen zwei benachbarten Arbeitspunkten, ohne dass ein weiterer Arbeitspunkt eingenommen wird.

Während der Durchführung der Arbeitsaufgabe muss sich der Roboter zu allen Zeitpunkten in einem gültigen, d.h. kollisionsfreien Bereich des Konfigurationsraums $C_{free,\sigma} \subset C$ bewegen.

Zunächst werden einige Definitionen dargelegt, die in der weiteren Beschreibung benötigt werden.

Im Folgenden beschreibt $\pi: [t_s, t_e] \to X$ ein kontinuierliches Pfadsegment in dem Zustandsraum, für das der Arbeitspunkt $x.\sigma(t)$ konstant bleibt. Dieser konstante Arbeitspunkt wird als $\pi.\sigma$ bezeichnet. Ein Pfad $\{\pi_i\}_{i \leq k} \in \Pi$ mit

$$i, k \in \mathbb{N}_{>0}$$

stellt eine Sequenz von k Pfadsegmenten dar. Ein Pfad ist dann gültig bzw. zulässig, wenn er kollisionsfrei ist, gemäß der bekannten Bewegungsdynamik des Roboters möglich ist und ferner nur korrekte Transitionen zwischen Arbeitspunkten enthält. Eine Transition ist dabei dann korrekt, wenn sie von dem Transitionsbereich mit der korrekten Manipulation zu einem benachbarten Arbeitszustand wechselt.

Die soeben beschriebene Gültigkeit von Pfaden kann mathematisch wie folgt beschrieben werden:

**Definition 1 (gültiger Pfad):**

Ein Pfad ist dann und nur dann gültig, wenn die folgenden Bedingungen 1), 2) und 3) erfüllt sind:

1) $\pi_i(\tau).c \in C_{free,\pi_i.\sigma}$ für $\tau \in [t_{s_i}, t_{e_i}]$, $i \in 1...k$,
2) $\pi_i(\tau).\dot{c} \in f(\pi_i(\tau).c, u)$ mit $u \in U$,
3) $\pi_{i+1}(t_{s_{i+1}}) = T_{\pi_i.\sigma, \pi_{i+1}.\sigma}(\pi_i(t_{e_i}))$ und
$\pi_i(t_{e_i}).c \in C_{\pi_i.\sigma, \pi_{i+1}.\sigma}$ für $i \in 1...k - 1$.

Neben diesen gültigen Pfaden gibt es Pfade, welche die Arbeitsaufgabe lösen. Solche Pfade zeichnen sich dadurch aus, dass sie ausgehend von einem Startzustand $x_{start} \in X$ zu einem Zustand innerhalb der Menge von Zielzuständen $X_{goal} \subset X$ führen. Ein solcher Pfad wird auch als umsetzbarer Pfad bezeichnet, der wie folgt definiert ist:

**Definition 2 (umsetzbarer Pfad):**

Ein Pfad ist dann und nur dann umsetzbar, wenn er ein gültiger Pfad gemäß der obigen Definition 1 ist und ferner $\pi_1(t_{s_1}) = x_{start}$ und $\pi_k(t_{ek}) \in X_{goal}$ gilt.

Im bestimmten, weiter unten beschriebenen Ausführungsformen werden ferner optimale Pfade bestimmt, welche zu niedrigen Kosten gemäß einer Kostenfunktion führen. Dabei wird folgende Kostenfunktion $K: \Pi \to \mathbb{R}_{>0}$ verwendet:

$$K(\{\pi_i\}_{i \leq k}) = \sum_{i=1}^{k} C_p(\pi_i) + \sum_{i=1}^{k-1} C_t(\pi_i.\sigma, \pi_{i+1}.\sigma)$$

$$C_p(\pi) = \int_{t_s}^{t_e} L(\pi(\tau)) d\tau$$

Die Funktion $C_p$ weist Pfadsegmenten nicht-negative Kosten zu, wobei $L_{max} > L(x) > L_{min} > 0$ inkrementale Kosten darstellen und $C_t > C_{t,min} > 0$ nach unten begrenzte positiven Kosten für Transitionen sind. Vorzugsweise stellt dabei die Größe L(x) die Zeit t dar.

Basierend auf der obigen Kostenfunktion kann ein optimaler Pfad wie folgt definiert werden:

**Definition 3 (optimaler Pfad):**

Ein Pfad $\{\pi_i\}_{i\leq k}^*$ ist dann und nur dann optimal, wenn er gemäß der obigen Definition 2 umsetzbar ist und ferner seine Kosten minimal sind, d.h. wenn gilt:

$$C(\{\pi_i\}_{i\leq k}^*) = \min_{\{\pi_i\}_{i\leq k}\in\Pi} C(\{\pi_i\}_{i\leq k})$$

Das Ziel des nachfolgend beschriebenen Verfahrens besteht in der Bestimmung eines Arbeitsablaufs zur Durchführung einer Arbeitsaufgabe durch einen Roboter, wobei ggf. auch das Optimierungsziel von niedrigen Kosten gemäß der obigen Kostenfunktion berücksichtigt wird.

Zur Implementierung der hier beschriebenen Ausführungsform werden bestimmte Berechnungen in der Form von entsprechenden Operationen definiert. Die Operation randomMotion gibt eine zufällige Steuertrajektorie

$$u_{t_1}^{t_2}:[t_1,t_2]\to U$$

aus, welche die Bewegung des Roboters beschreibt. Da Transitionsbereiche $C_{\sigma 1,\sigma 2}$ niedrig-dimensionale Mannigfaltigkeiten des Konfigurationsraums $C$ sind, liegt die Wahrscheinlichkeit einer zufälligen Bewegung hin zu einem solchen Bereich im Wesentlichen bei Null. Um jedoch auch Bewegungen mit einem Arbeitspunktwechsel mit positiver Wahrscheinlichkeit zu ermöglichen, wird die Operation randomTransition $(x,\sigma')$ verwendet, die eine zufällige Steuertrajektorie berechnet, welche den Roboter in einen Transitionsbereich $C_{x.\sigma,\sigma'}$ führt.

Die Operation integrate $(x, u_{t_1}^{t_2})$ nimmt als Eingangsvariablen den Zustand x sowie die Steuertrajektorie $u_{t_1}^{t_2}$, um den Zustand nach Anwenden der Steuertrajektorie zu berechnen. Im Falle, dass die Steuertrajektorie in einen Transitionsbereich führt, berücksichtigt die Operation integrate auch die entsprechende Manipulation zum Erreichen des benachbarten Arbeitspunkts. Schließlich beschreibt die Operation is Valid $(x, u_{t_1}^{t_2})$, ob die Steuertrajektorie den Roboter auf einer gültigen Trajektorie innerhalb des kollisionsfreien Bereichs des Konfigurationsraums $C_{free,x1.\sigma}$ führt. Durch die Operationen randomMotion und randomTransition werden bereits Trajektorien gefunden, welche die Bedingungen 2) und 3) der obigen Definition 1 erfüllen. Demzufolge muss die Operation isValid nur noch die Bedingung 1) aus der obigen Definition 1 überprüfen.

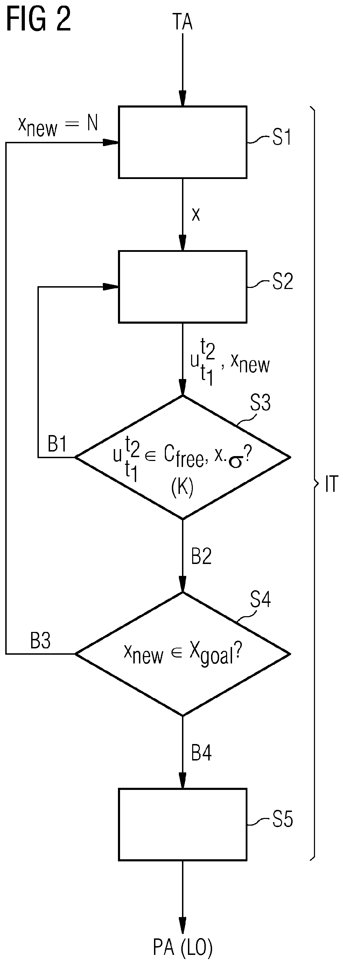

Nunmehr wird anhand von Fig. 2 eine Ausführungsform der Planung eines durch einen Roboter ausführbaren Arbeitsablaufs erläutert. Diese Ausführungsform stellt eine Erweiterung des EST-Algorithmus aus Dokument [1] dar, wobei die Erweiterung darin besteht, dass nunmehr auch diskrete Arbeitspunkte bzw. symbolische Zustände berücksichtigt werden.

Gemäß Fig. 2 wird eine Iteration IT durchgeführt, welche die in Fig. 1 definierte Arbeitsaufgabe TA verarbeitet. In Analogie zum EST-Algorithmus wird mit der Iteration IT ein Baum umfassend Knoten N in der Form von Zuständen und Kanten E in der Form von Trajektorien aufgebaut, bis der Startzustand $x_{start}$ mit der Region $X_{goal}$ verbunden ist bzw. alternativ ein Zeitbudget $t_{max}$ ausgeschöpft ist, d.h. eine Zeitspanne $t_{max}$ abgelaufen ist.

Im Rahmen einer Iterationsschleife der Iteration IT wird in einem Schritt S1 zufällig ein Zustand bzw. Knoten x aus den Zuständen bzw. Knoten N ausgewählt, welche in den vorhergehenden Iterationsschleifen bereits ermittelt wurden. Zu Beginn der Iteration wird dabei $x = x_{start}$ gesetzt. Im Folgenden ist unter dem Begriff "zufällig" eine probabilistische, d.h. nicht-deterministische Bestimmung zu verstehen.

In der hier beschriebenen Ausführungsform wird zur zufälligen Auswahl eines Knotens die Operation sampleWeighted(N) genutzt, welche bei der Auswahl eines Knotens ein größeres Gewicht auf Knoten legt, welche in dünn besetzten Gebieten des Zustandsraums liegen, d.h. in Gebieten, aus denen in früheren Iterationsschleifen noch nicht viele Knoten ausgewählt wurden.

In einem nächsten Schritt S2 des Verfahrens der Fig. 2 wird eine Trajektorie $u_{t_1}^{t_2}$ bestimmt, wobei hierfür die Operation sampleAction(x) verwendet wird. Diese Operation stellt den wesentlichen Unterschied des Verfahrens der Fig. 2 vom EST-Algorithmus dar. Die Operation kann durch folgenden Pseudocode beschrieben werden:

```
procedure sampleAction(x)
        actions = {randomMotion()}
        for σ' aus der Menge N_{x,σ} do
                actions.append(randomTransition(x,σ'))
        return randomChoice(actions)
```

Dabei wird zunächst eine Aktion bzw. Trajektorie basierend auf der obigen Operation randomMotion ausgehend von dem ausgewählten Zustand x bestimmt. Diese Operation verändert den Arbeitspunkt nicht. Anschließend wird für jeden Arbeitspunkt $\sigma'$ aus der Menge $N_{x,\sigma}$ der zum Arbeitspunkt des Zustands x benachbarten Arbeitspunkte eine Trajektorie gemäß der obigen Operation randomTransition bestimmt, d.h. es werden Trajektorien ermittelt, die im Transitionsbereich $C_{x,\sigma,\sigma'}$ enden. Diese Trajektorien werden zu den bereits bestimmten Trajektorien hinzugefügt (actions.append). Anschließend wird zufällig aus den bestimmten Trajektorien eine Trajektorie $u_{t_1}^{t_2}$ ausgewählt (randomChoice), wobei hierfür eine Gleichverteilung verwendet wird. Als Ergebnis erhält man entweder eine Trajektorie, die zu einem Zustand mit unverändertem Arbeitspunkt führt, oder eine Trajektorie, die zu einem Zustand mit einem benachbarten Arbeitspunkt führt. Schließlich wird im Rahmen von Schritt S2 mittels der oben beschriebenen Operation intergrate der neue Zustand $x_{new}$ ermittelt, der sich aus der Trajektorie $u_{t_1}^{t_2}$ ergibt.

In einem Schritt S3 wird nunmehr überprüft, ob die Trajektorie $u_{t_1}^{t_2}$ auch gültig dahingehend ist, dass sie im kollisionsfreien Raum liegt. Dabei kann ggf. auch noch die obige Kostenfunktion K berücksichtigt werden, was in Fig. 2 durch die Angabe dieses Bezugszeichens in Klammern angedeutet wird und weiter unten noch näher erläutert wird. Ist die entsprechende Trajektorie nicht gültig, wird sie verworfen und gemäß dem Zweig B1 zu Schritt S2 zurückgegangen. Ist die Trajektorie hingegen gültig, wird gemäß dem Zweig B2 zu Schritt S4 übergegangen, in dem überprüft wird, ob der mit der Trajektorie erreichte neue Zustand $x_{new}$ innerhalb der Menge der Zielzustände $X_{goal}$ liegt. Ist dies nicht der Fall, wird gemäß dem Zweig B3 der neue Zustand der Menge an Zuständen bzw. Knoten N hinzugefügt, was durch die Gleichung $x_{new} = N$ in Fig. 2 zum Ausdruck kommt. Ferner wird eine neue Iterationsschleife durch Rückkehr zu Schritt S1 gestartet.

Liegt der neue Zustand $x_{new}$ hingegen innerhalb der Menge der Zielzustände $X_{goal}$, wird gemäß Zweig B4 zu Schritt S5 übergegangen, in dem ein Pfad aus im Vorangegangenen bestimmten gültigen Trajektorien identifiziert wird, der vom Startzustand $x_{start}$ zum neuen Zustand $x_{new}$ führt. Dieser Pfad stellt einen geplanten Arbeitsablauf zur Erfüllung der Arbeitsaufgabe des Roboters dar. Gegebenenfalls kann dieser Pfad noch einer lokalen Optimierung unterzogen werden, wie weiter unten noch näher beschrieben wird. Die Durchführung einer lokalen Optimierung ist in Fig. 2 durch das in Klammern angegebene Bezugszeichen LO verdeutlicht.

Das Verfahren der Fig. 2 kann durch den Algorithmus **MM-EST** mit folgendem Pseudocode beschrieben werden:

```
procedure MM-EST(x_{start}, X_{goal})
        N = {x_{start}}
        E = {}
        while t<t_{max} do
                x = sampleWeighted(N)
                u_{t_1}^{t_2} = sampleAction(x)
                x_{new} = integrate(x, u_{t_1}^{t_2})
                if isValid(x, u_{t_1}^{t_2}) then
                        N.append(x_{new})
                        E.append((x, u_{t_1}^{t_2}, x_{new}))
                        if x_{new} ∈ X_{goal} then
                                return Pfad nach x_{new}
```

**return** failure

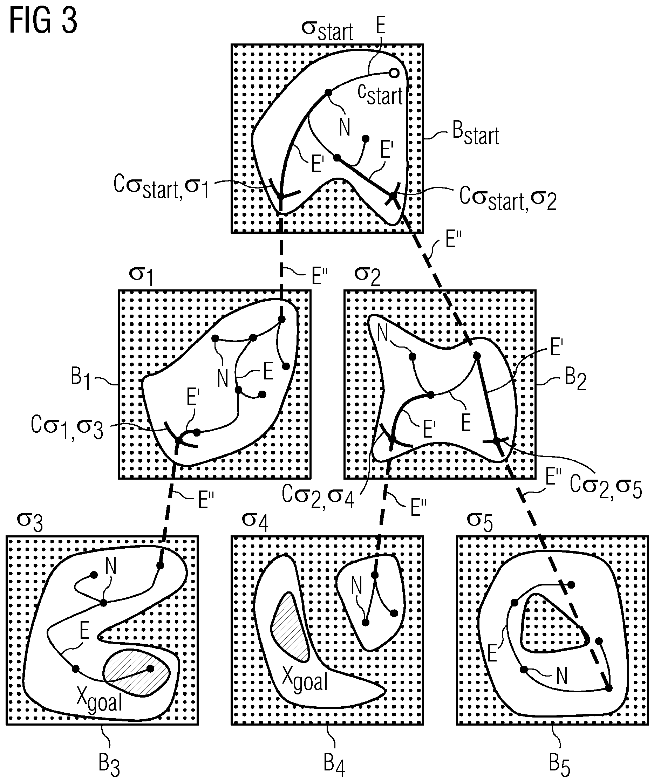

N.append bzw. E.append bezeichnen das Hinzufügen eines Knotens bzw. einer Kante zum Baum im Zustandsraum. Fig. 3 verdeutlicht nochmals beispielhaft die Durchführung des Verfahrens der Fig. 2. Gemäß Fig. 3 werden durch die Boxen $B_{start}$, $B_1$, $B_2$, $B_3$, $B_4$ und $B_5$ entsprechende Konfigurationsräume mit festen jeweiligen symbolischen Zuständen $\sigma_{start}$, $\sigma_1$, $\sigma_2$, $\sigma_3$, $\sigma_4$ und $\sigma_5$ repräsentiert. Innerhalb jeder Box stellen weiße Bereiche kollisionsfreie Gebiete der Bewegung des Roboters dar, wohingegen gepunktete Bereich kollisionsbehaftete Gebiete repräsentieren. Die Konfiguration des Startzustands $x_{start}$ ist in Fig. 3 mit $c_{start}$ bezeichnet. Die Menge der Zielzustände $X_{goal}$ ist durch schraffierte Bereiche dargestellt und liegt im dargestellten Beispiel sowohl im Konfigurationsraum mit dem symbolischen Zustand $\sigma_3$ als auch im Konfigurationsraum mit dem symbolischen Zustand $\sigma_4$.

Die im Rahmen der obigen Iteration gewonnen Zustände werden durch Knoten N in der Form von schwarzen Punkten repräsentiert, welche nur teilweise mit diesem Bezugszeichen versehen sind. Die Knoten innerhalb der weiter unten spezifizierten Transitionsbereiche gehören dabei nicht zu der Menge der Knoten N. Es existieren zwischen den Knoten drei verschiedene Kanten E, E' und E". Die Kanten E sind dünne Linien, welche nur teilweise mit diesem Bezugszeichen bezeichnet sind. Sie stellen eine Trajektorie zwischen zwei Zuständen dar, die sich im symbolischen Zustand bzw. Arbeitspunkt nicht unterscheiden. Die dickeren Kanten E' stellen Trajektorien dar, welche zu Transitionsbereichen zwischen zwei benachbarten Arbeitspunkten führen. Diese Transitionsbereiche sind mit $C_{\sigma start, \sigma_1}$, $C_{\sigma start, \sigma_2}$, $C_{\sigma_1, \sigma_3}$, $C_{\sigma_2, \sigma_4}$ sowie $C_{\sigma_2, \sigma_5}$ bezeichnet. An die entsprechenden Kanten E' schließen sich gestrichelte Kanten E". Diese Kanten beschreiben eine Manipulation des Roboters, die von dem entsprechenden Transitionsbereich zu einem Zustand mit benachbartem Arbeitspunkt führt.

Die einzelnen Kanten E werden mittels der oben beschriebenen Operationen randomMotion und integrate bestimmt. Demgegenüber werden die jeweiligen Kombinationen aus benachbarten Kanten E' und E" durch die oben beschriebenen Operationen randomTransition und integrate ermittelt. Die Funktion randomTransition bestimmt dabei mit einem an sich bekannten analytischen inversen kinematischen Löser probabilistisch einen Zustand innerhalb des Transitionsbereichs, von dem aus ein Wechsel in den benachbarten Arbeitspunkt möglich ist. Ferner wird der Online-Trajektorien-Generator Reflexxes zur Berechnung entsprechender Steuertrajektorien zu den Transitionsbereichen eingesetzt. Dieser Trajektorien-Generator kann auch in der Operation randomMotion genutzt werden. Die Kollisionsüberprüfung wird mit der Open-Source-Bibliothek FCL durchgeführt. Für die Operation sampleWeighted, die zur Auswahl der Knoten dient, wird eine gitter-basierte Approximation für die Ermittlung der Zustandsdichte eingesetzt. Die Gitterzellen korrespondieren dabei mit den symbolischen Zuständen.

Das im Vorangegangenen beschriebene Verfahren ermöglicht die Planung eines Arbeitsablaufs eines Roboters, indem ein Zustandsbaum aufgebaut wird, dessen Knoten zwischen unterschiedlichen symbolischen Zuständen wechseln können. Der Planer hat dabei den Vorteil, dass er auf einfache Weise mit dem AO-x Meta-Algorithmus aus Dokument [2] kombiniert werden kann, um optimale Arbeitsabläufe gemäß der obigen Kostenfunktion aufzufinden.

Im Folgenden wird beschrieben, wie der obige Planer MM-EST mit dem AO-x Meta-Algorithmus kombiniert werden kann. Dies geschieht dadurch, dass in dem Planer MM-EST zusätzlich die Variable der Kosten berücksichtigt wird. Der Planer MM-EST wird innerhalb des Zeitbudgets $t_{max}$ aufeinander folgend durchgeführt und berechnet dabei die Kosten gemäß der obigen Kostenfunktion K. Die weiter unten genannten Kosten $c_{best}$ stellen die Kosten dar, welche bei der letzten Durchführung des Algorithmus MM-EST bestimmt wurden.

Um nunmehr die Kosten in dem Algorithmus MM-EST geeignet zu berücksichtigen, wird die obige Operation isValid derart abgewandelt, dass sie auch immer die Kosten eines Pfads vom Startzustand bis zu der Trajektorie ermittelt, auf welche die Operation isValid angewandt wird. Sollten die Kosten dabei die Kosten $c_{best}$ der letzten Durchführung des Algorithmus MM-EST überschreiten, wird die Trajektorie als ungültig bzw. nicht zulässig eingestuft und dann wieder mittels der Operation sampleAction eine neue Trajektorie bestimmt.

Der soeben beschriebene Algorithmus, der den AO-x Meta-Algorithmus mit dem Algorithmus MM-EST kombiniert, wird als AO-MM-EST bezeichnet und kann durch Pseudocode wie folgt beschrieben werden:

```
procedure AO-MM-EST (x_start, X_goal)
        c_best = +∞
        plan = None
        while t<t_max do
                new_plan = MM-EST (x_start, X_goal, c_best)
                if new_plan then
                        plan = new_plan
                        c_best = plan.cost
        return plan
```

Sofern durch den Algorithmus MM-EST im obigen Pseudocode ein neuer Plan new_plan bestimmt werden kann, hat dieser Plan die geringsten Kosten und wird deshalb zunächst als geplanter Arbeitsablauf behandelt, der dann durch einen neuen Arbeitsablauf ersetzt wird, wenn bei einer späteren Durchführung des Algorithmus MM-EST wieder ein neuer Plan gefunden wird. Um am Anfang des Algorithmus überhaupt das Auffinden eines Arbeitsablaufs zu ermöglichen, werden die Kosten $c_{best}$ zunächst auf den Wert unendlich gesetzt. Dieser Wert wird immer dann aktualisiert, wenn durch den Algorithmus MM-EST ein neuer Plan gefunden wird.

In einer weiteren Variante des erfindungsgemäßen Verfahrens, die eine Erweiterung des obigen Algorithmus AO-MM-EST darstellt, wird der Planer MM-EST zu Beginn des Verfahrens nicht einmalig gestartet, sondern parallel in mehreren Verarbeitungszweigen durchgeführt, welche auch als Threads bezeichnet werden. Sobald ein Thread einen geplanten Arbeitsablauf auffindet, werden alle anderen Threads verworfen. Hierdurch wird die Wahrscheinlichkeit erhöht, dass durch das Verfahren vor Ablauf des Zeitbudgets ein Arbeitsablauf bestimmt werden kann. Darüber hinaus wird der Algorithmus AO-MM-EST auch durch eine lokale Optimierung erweitert, die auf jeden, durch den Algorithmus MM-EST ermittelten Arbeitsablauf angewandt wird. Die Verwendung von lokalen Optimierungen ist an sich bekannt. In einer bevorzugten Ausführungsform wird als lokale Optimierung eine Glättung des Pfads des Arbeitsablaufs durchgeführt.

Der soeben beschriebene Algorithmus mit den beiden Erweiterungen der parallelen Threads und der lokalen Optimierung wird im Folgenden als MM-EST* bezeichnet und durch folgende Pseudocode beschrieben:

```
procedure MM-EST* (x_start, X_goal)
        c_best = +∞
        plan = None
        while t<t_max do
                for numThreads do in jedem Thread
                        new_plan = MM-EST (x_start, X_goal, c_best)
                        if new_plan then
                                plan = new_plan
                                Verwerfe alle anderen Threads
                plan = optimizeLocally(plan)
                c_best = plan.cost
        return plan
```

optimizeLocally(plan) stellt im obigen Algorithmus die lokale Optimierung dar.

Die im Vorangegangenen beschriebenen Ausführungsformen gemäß den Algorithmen AO-MM-EST und MM-EST* wurden von den Erfindern basierend auf dem Szenario des Diagramms DI der Fig. 1 getestet. Dabei wurden die folgenden fünf Arbeitsaufgaben A1 bis A5 betrachtet:

A1: Alle Objekte O1 bis O3 werden durch beide Roboterarme 1 und 2 über deren Kameras lokalisiert.
A2: Das linke Objekt O1 befindet sich im Greifer des rechten Roboterarms 2.
A3: Das rechte Objekt O2 ist in der Schiene des Objekts O3 eingesetzt.
A4: Das linke Objekt O1 ist in der Schiene des Objekts O3 eingesetzt, wobei die anfängliche Position der Objekte so gewählt ist, dass eine Übergabe des Objekts zwischen den Greifern der beiden Roboterarme 1 und 2 erfolgen muss.
A5: Beide Objekte O1 und O2 sind in die Schiene des Objekts O3 eingesetzt, wobei die anfängliche Position der Objekte so gewählt ist, dass eine Übergabe eines Objekts zwischen den Greifern der Roboterarme 1 und 2 erfolgen muss.

Die beiden Algorithmen AO-MM-EST und MM-EST* wurden mit dem bekannten PTR-Algorithmus verglichen, der in dem Dokument [3] beschrieben ist. In der Kostenfunktion wurde dabei als Funktion $L(x)$ die Zeit verwendet, so dass eine geringere Ausführungszeit des geplanten Arbeitsablaufs zu niedrigeren Kosten führt. Die nachfolgende Tabelle zeigt die mittlere Ausführungszeit der beiden Algorithmen AO-MM-EST und MM-EST* sowie des bekannten PTR-Algorithmus für die einzelnen oben beschriebenen Arbeitsaufgaben A1 bis A5. Die entsprechenden Standardabweichungen sind in eckigen Klammern angegeben.

| Alle Werte in [s] | A1 | A2 | A3 | A4 | A5 |
| --- | --- | --- | --- | --- | --- |
| PTR | 14.7 [0.24] | 21.4 [0.76] | 22.5 [0.42] | 25.7 [0.33] | 36.7 [0.34] |
| AO-MM-EST | 11.0 [0.02] | 9.8 [0.09] | 14.1 [0.03] | 18.8 [0.14] | 30.4 [0.16] |
| MM-EST* | 10.7 [0.01] | 9.0 [0.02] | 13.6 [0.02] | 17.1 [0.04] | 28.3 [0.06] |

Wie man der Tabelle entnehmen kann, werden mit den erfindungsgemäßen Algorithmen deutlich verkürzte Ausführungszeiten für die entsprechenden Arbeitsaufgaben im Vergleich zum herkömmlichen PTR-Algorithmus erreicht.

Die im Vorangegangenen beschriebenen Ausführungsformen der Erfindung weisen eine Reihe von Vorteilen auf. Insbesondere wird erstmalig ein Verfahren zur kinodynamischen Planung geschaffen, welches auf einer probabilistischen Auswahl von Zuständen basiert und dabei in geeigneter Weise symbolische Zustände berücksichtigt. Dieses Verfahren kann einfach und effizient mit einer Optimierung kombiniert werden, welche unter Berücksichtigung einer geeigneten Kostenfunktion optimale Arbeitsabläufe ermittelt. Insbesondere können dabei Arbeitsabläufe bestimmt werden, welche eine möglichst geringe Ausführungszeit aufweisen.

Literaturverzeichnis

[1] D. Hsu, R. Kindel, J.-C. Latombe und S. Rock: "Randomized kinodynamic motion planning with moving obstacles" The Int. Journal of Robotics Research, vol. 21, no. 3, S. 233-255, 2002.

[2] K. Hauser und Y. Zhou: "Asymptotically optimal planning by feasible kinodynamic planning in a state-cost space", IEEE Transactions on Robotics, vol. 32, no. 6, S. 1431-1443, 2016.

[3] K. Hauser: "Task planning with continuous actions and nondeterministic motion planning queries" in AAAI Workshop on Bridging the Gap between Task and Motion Planning, 2010.

**Patentansprüche**

1. Verfahren zur rechnergestützten Planung eines durch einen Roboter (1, 2) ausführbaren Arbeitsablaufs (PA) zur Erfüllung einer Arbeitsaufgabe (TA), wobei ein Zustand (x) des Roboters (1, 2) durch dessen Bewegungen veränderbar ist und zu einem jeweiligen Zeitpunkt (t) in einem Zustandsraum durch eine Konfiguration (c) und einen Arbeitspunkt (o) beschrieben wird, wobei die Konfiguration (c) die räumliche Lage einer Mehrzahl von Roboterachsen und zumindest die erste zeitliche Ableitung der räumlichen Lage umfasst und der Arbeitspunkt (o) einen diskreten Arbeitszustand des Roboters (1, 2) in Bezug auf die Arbeitsaufgabe (TA) angibt, wobei die Arbeitsaufgabe (TA) durch einen Startzustand ($x_{start}$) des Roboters (1, 2) sowie eine Menge an Zielzuständen ($X_{goal}$) des Roboters (1, 2) gegeben ist und für benachbarte Arbeitspunkte ($\sigma$) Manipulationen des Roboters (1, 2) definiert sind, welche die Veränderung seines Zustands (x) direkt zwischen zwei benachbarten Arbeitspunkten ($\sigma$) ermöglichen, wobei ein oder mehrere Male eine Iteration (IT) durchgeführt wird und der geplante Arbeitsablauf (PA) aus einem Arbeitsablauf erhalten wird, der durch die oder eine der Iterationen (IT) bestimmt wird, wobei eine Iteration (IT) mit dem Startzustand ($x_{start}$) als gewonnenen Zustand (N) des Roboters (1, 2) initialisiert wird und in einer jeweiligen Iterationsschleife folgende Schritte durchführt:

   i) es wird aus allen durch frühere Iterationsschleifen gewonnenen Zuständen (N) des Roboters (1, 2) probabilistisch ein Zustand (x) ausgewählt;

ii) es wird probabilistisch eine zulässige Trajektorie $(u_{t1}^{t2})$ der Bewegung des Roboters (1, 2) ausgehend von der Konfiguration (c) des ausgewählten Zustands (x) hin zu einer Konfiguration (c) in einem neuen Zustand ($x_{new}$) bestimmt, wobei der neue Zustand ($x_{new}$) entweder den gleichen Arbeitspunkt ($\sigma$) wie der ausgewählte Zustand (x) oder einen benachbarten Arbeitspunkt ($\sigma$) aufweist und wobei notwendige Bedingungen für die Zulässigkeit der Trajektorie $(u_{t1}^{t2})$ darin bestehen, dass die Trajektorie $(u_{t1}^{t2})$ eine kollisionsfreie Bewegung des Roboters (1, 2) beschreibt und gemäß einer vorgegebenen Bewegungsdynamik des Roboters (1, 2) möglich ist;

iii) es wird ermittelt, ob der neue Zustand ($x_{new}$) in der Menge der Zielzustände ($X_{goal}$) liegt, wobei im Falle, dass der neue Zustand ($x_{new}$) nicht in der Menge der Zielzustände ($X_{goal}$) liegt, der neue Zustand ($x_{new}$) als ein durch die jeweilige Iterationsschleife gewonnener Zustand (N) festgelegt wird und zur nächsten Iterationsschleife übergegangen wird und wobei im Falle, dass der neue Zustand ($x_{new}$) in der Menge der Zielzustände ($X_{goal}$) liegt, die Iteration (IT) mit der Bestimmung eines Arbeitsablaufs beendet wird, der aus dem Pfad erhalten wird, der mittels der Iteration (IT) bestimmte zulässige Trajektorien $(u_{t1}^{t2})$ umfasst und vom Startzustand ($x_{start}$) zum neuen Zustand ($x_{new}$) in der Menge der Zielzustände ($X_{goal}$) führt.

2. Verfahren nach Anspruch 1, wobei bei der erstmaligen Beendigung einer Iteration (IT) der geplante Arbeitsablauf (PA) aus dem Arbeitsablauf erhalten wird, der durch diese Iteration (IT) bestimmt ist, und anschließend das Verfahren beendet wird.

3. Verfahren nach Anspruch 1, bei dem die Iteration (IT) mehrmals durchgeführt wird, indem eine beendete Iteration (IT) neu gestartet wird, wobei basierend auf einem Optimierungsziel von niedrigen Kosten der durch die Iterationen (IT) bestimmten Arbeitsabläufe gemäß einer Kostenfunktion (K) der geplante Arbeitsablauf (PA) aus demjenigen Arbeitsablauf mit den niedrigsten Kosten erhalten wird.

4. Verfahren nach Anspruch 3, wobei die Kostenfunktion (K) derart ausgestaltet ist, dass eine kürzere Ausführungszeit eines Pfads zwischen zwei Zuständen (x) des Roboters (1, 2) zu niedrigeren Kosten führt.

5. Verfahren nach Anspruch 3 oder 4, wobei eine Trajektorie $(u_{t1}^{t2})$ in Schritt ii) der Iteration (IT) dann zulässig ist, wenn neben den notwendigen Bedingungen die Bedingung erfüllt ist, dass der Pfad, der die in der aktuellen Iterationsschleife bestimmte Trajektorie $(u_{t1}^{t2})$ und von in früheren Iterationsschleifen (IT) bestimmte zulässige Trajektorien $(u_{t1}^{t2})$ umfasst und von dem Startzustand ($x_{start}$) zu dem neuen Zustand ($x_{new}$) führt, niedrigere Kosten als der in der vorhergehenden Iterationsschleife bestimmte Arbeitsablauf aufweist, wobei das Verfahren mit einem vorgegebenen Kostenwert intialisiert wird, der vorzugsweise auf unendlich gesetzt ist.

6. Verfahren nach einem der vorhergehenden Ansprüche, wobei die probabilistische Auswahl des Zustands (x) des Roboters (1, 2) in Schritt i) derart ausgestaltet ist, dass die Wahrscheinlichkeit der Auswahl eines Zustands (x) aus einer Region im Zustandsraum mit abnehmender Dichte von in vorhergehenden Iterationsschleifen gewonnenen Zuständen in der Region zunimmt.

7. Verfahren nach einem der vorhergehenden Ansprüche, wobei zu Beginn des Verfahrens gleichzeitig mehrere Iterationen (IT) gestartet werden, wobei dann, wenn eine Iteration (IT) erstmalig beendet wird, alle restlichen, gleichzeitig gestarteten Iterationen (IT) verworfen werden.

8. Verfahren nach einem der vorhergehenden Ansprüche, wobei in Schritt ii) probabilistisch eine erste Trajektorie bestimmt wird, die von der Konfiguration (c) des ausgewählten Zustands (x) zu der Konfiguration eines Zustands (x) mit dem gleichen Arbeitspunkt ($\sigma$) wie der ausgewählte Zustand (x) führt, sowie probabilistisch für jeden Arbeitspunkt ($\sigma$), der zum Arbeitspunkt ($\sigma$) des ausgewählten Zustands ($\sigma$) benachbart ist, eine zweite Trajektorie bestimmt wird, die von der Konfiguration (c) des ausgewählten Zustands (x) zu einer Konfiguration (c) eines Zustands (x) umfassend den jeweiligen benachbarten Arbeitspunkt ($\sigma$) führt, wobei aus den ersten und zweiten Trajektorien probabilistisch eine Trajektorie ausgewählt wird, welche die in Schritt ii) bestimmte Trajektorie $(u_{t1}^{t2})$ vor Überprüfung ihrer Zulässigkeit darstellt.

**9.** Verfahren nach Anspruch 8, wobei die Bestimmung einer zweiten Trajektorie $(u_{t1}^{t2})$ derart abläuft, dass mittels eines inversen kinematischen Lösers probabilistisch eine Konfiguration (c) des Roboters (1, 2) bestimmt wird, von der ein Wechsel von dem Arbeitspunkt ($\sigma$) des ausgewählten Zustands (x) in den benachbarten Arbeitspunkt ($\sigma$)

mittels einer Manipulation möglich ist, und anschließend eine Trajektorie $(u_{t1}^{t2})$ von der Konfiguration ($\sigma$) des ausgewählten Zustands (x) zu der mittels des inversen kinematischen Lösers bestimmten Konfiguration ($\sigma$) ermittelt

wird, wobei die ermittelte Trajektorie zusammen mit der Manipulation die zweite Trajektorie $(u_{t1}^{t2})$ darstellt.

**10.** Verfahren nach einem der vorhergehenden Ansprüche, wobei der geplante Arbeitsablauf (PA) durch eine lokale Optimierung (LO), insbesondere eine Glättung, aus dem Arbeitsablauf erhalten wird, der durch die oder eine der Iterationen (IT) bestimmt wird, und/oder der in Schritt ii) bestimmte Arbeitsablauf durch eine lokale Optimierung (LO), insbesondere eine Glättung, aus dem Pfad erhalten wird, der mittels der Iteration bestimmte zulässige Trajektorien $(u_{t1}^{t2})$ umfasst und vom Startzustand ($x_{start}$) zum neuen Zustand ($x_{new}$) in der Menge der Zielzustände ($X_{goal}$) führt.

**11.** Vorrichtung zur rechnergestützten Planung eines durch einen Roboter (1, 2) ausführbaren Arbeitsablaufs (PA) zur Erfüllung einer Arbeitsaufgabe (TA), wobei ein Zustand (x) des Roboters (1, 2) durch dessen Bewegungen veränderbar ist und zu einem jeweiligen Zeitpunkt (t) in einem Zustandsraum durch eine Konfiguration (c) und einen Arbeitspunkt ($\sigma$) beschrieben wird, wobei die Konfiguration (c) die räumliche Lage einer Mehrzahl von Roboterachsen und zumindest die erste zeitliche Ableitung der räumlichen Lage umfasst und der Arbeitspunkt ($\sigma$) einen diskreten Arbeitszustand des Roboters (1, 2) in Bezug auf die Arbeitsaufgabe (TA) angibt, wobei die Arbeitsaufgabe (TA) durch einen Startzustand ($x_{start}$) des Roboters (1, 2) sowie eine Menge an Zielzuständen ($X_{goal}$) des Roboters (1, 2) gegeben ist und für benachbarte Arbeitspunkte ($\sigma$) Manipulationen des Roboters (1, 2) definiert sind, welche die Veränderung seines Zustands (x) direkt zwischen zwei benachbarten Arbeitspunkten ($\sigma$) ermöglichen, wobei die Vorrichtung ein Rechnermittel zur Durchführung eines Verfahrens umfasst, bei dem ein oder mehrere Male eine Iteration (IT) durchgeführt wird und der geplante Arbeitsablauf (PA) aus einem Arbeitsablauf erhalten wird, der durch die oder eine der Iterationen (IT) bestimmt wird, wobei eine Iteration (IT) mit dem Startzustand ($x_{start}$) als gewonnenen Zustand (N) des Roboters (1, 2) initialisiert wird und in einer jeweiligen Iterationsschleife folgende Schritte durchführt:

i) es wird aus allen durch frühere Iterationsschleifen gewonnenen Zuständen (N) des Roboters (1, 2) probabilistisch ein Zustand (x) ausgewählt;

ii) es wird probabilistisch eine zulässige Trajektorie $(u_{t1}^{t2})$ der Bewegung des Roboters (1, 2) ausgehend von der Konfiguration (c) des ausgewählten Zustands (x) hin zu einer Konfiguration (c) in einem neuen Zustand ($x_{new}$) bestimmt, wobei der neue Zustand ($x_{new}$) entweder den gleichen Arbeitspunkt ($\sigma$) wie der ausgewählte Zustand (x) oder einen benachbarten Arbeitspunkt ($\sigma$) aufweist und wobei notwendige Bedingungen für die Zulässigkeit der Trajektorie $(u_{t1}^{t2})$ darin bestehen, dass die Trajektorie $(u_{t1}^{t2})$ eine kollisionsfreie Bewegung des Roboters (1, 2) beschreibt und gemäß einer vorgegebenen Bewegungsdynamik des Roboters (1, 2) möglich ist;

iii) es wird ermittelt, ob der neue Zustand ($x_{new}$) in der Menge der Zielzustände ($X_{goal}$) liegt, wobei im Falle, dass der neue Zustand ($x_{new}$) nicht in der Menge der Zielzustände ($X_{goal}$) liegt, der neue Zustand ($x_{new}$) als ein durch die jeweilige Iterationsschleife gewonnener Zustand (N) festgelegt wird und zur nächsten Iterationsschleife übergegangen wird und wobei im Falle, dass der neue Zustand ($x_{new}$) in der Menge der Zielzustände ($X_{goal}$) liegt, die Iteration (IT) mit der Bestimmung eines Arbeitsablaufs beendet wird, der aus dem Pfad erhalten wird, der mittels der Iteration (IT) bestimmte zulässige Trajektorien $(u_{t1}^{t2})$ umfasst und vom Startzustand ($x_{start}$)

zum neuen Zustand ($x_{new}$) in der Menge der Zielzustände ($X_{goal}$) führt.

12. Vorrichtung nach Anspruch 11, wobei das Rechnermittel zur Durchführung eines Verfahrens nach einem der Ansprüche 2 bis 10 eingerichtet ist.

13. Roboter, umfassend die Vorrichtung nach Anspruch 11 oder 12, um einen durch den Roboter (1, 2) ausführbaren Arbeitsablaufs (PA) zu planen.

14. Computerprogrammprodukt mit einem auf einem maschinenlesbaren Träger gespeicherten Programmcode zur Durchführung eines Verfahrens nach einem der Ansprüche 1 bis 10, wenn der Programmcode auf einem Computer ausgeführt wird.

15. Computerprogramm mit einem Programmcode zur Durchführung eines Verfahrens nach einem der Ansprüche 1 bis 10, wenn der Programmcode auf einem Computer ausgeführt wird.

FIG 1

$$x = (c, \sigma, t), \underbrace{x_{start}, x_{goal}}_{TA}$$

## FIG 2

TA

$x_{new} = N$

S1

x

S2

$u_{t_1}^{t_2}$, $x_{new}$

S3

B1

$u_{t_1}^{t_2} \in C_{free}, x \cdot \sigma?$
(K)

IT

B2

S4

B3

$x_{new} \in X_{goal}?$

B4

S5

PA (LO)

# FIG 3

Europäisches Patentamt
European Patent Office
Office européen des brevets

## EUROPÄISCHER RECHERCHENBERICHT

**Nummer der Anmeldung**

EP 18 15 1618

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SCHMITT PHILIPP S ET AL: "Optimal, sampling-based manipulation planning", 2017 IEEE INTERNATIONAL CONFERENCE ON ROBOTICS AND AUTOMATION (ICRA), IEEE, 29. Mai 2017 (2017-05-29), Seiten 3426-3432, XP033127132, DOI: 10.1109/ICRA.2017.7989390 [gefunden am 2017-07-21] * Zusammenfassung * * Seite 3427 - Seite 3429 * ----- | 1-15 | INV. B25J9/16 |
| A,D | HSU D ET AL: "Randomized kinodynamic motion planning with moving obstacles: ABSTRACT; FIGURE 1, 3.2-THE PLANNING ALGORITHM, 4.5-CHOOSING SUITABLE CONTROL FUNCTIONS, 7.4-ON-THE-FLY REPLANNING", INTERNATIONAL JOURNAL OF ROBOTICS RESEARCH, SAGE SCIENCE PRESS, THOUSAND OAKS, US, Bd. 21, Nr. 3, 1. März 2002 (2002-03-01), Seiten 233-255, XP002364280, ISSN: 0278-3649, DOI: 10.1177/027836402320556421 * Zusammenfassung * * Seite 234 - Seite 236 * ----- | 1-15 | |

**RECHERCHIERTE SACHGEBIETE (IPC)**

B25J
G05B

Der vorliegende Recherchenbericht wurde für alle Patentansprüche erstellt

| Recherchenort | Abschlußdatum der Recherche | Prüfer |
|---|---|---|
| Den Haag | 2. Juli 2018 | Dörre, Thorsten |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

................................................................
& : Mitglied der gleichen Patentfamilie, übereinstimmendes Dokument

EPO FORM 1503 03.82 (P04C03)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **D. HSU ; R. KINDEL ; J.-C. LATOMBE ; S. ROCK.** Randomized kinodynamic motion planning with moving obstacles. *The Int. Journal of Robotics Research,* 2002, vol. 21 (3), 233-255
- **K. HAUSER ; Y. ZHOU.** Asymptotically optimal planning by feasible kinodynamic planning in a state-cost space. *IEEE Transactions on Robotics,* 2016, vol. 32 (6), 1431-1443

- **K. HAUSER.** Task planning with continuous actions and nondeterministic motion planning queries. *AAAI Workshop on Bridging the Gap between Task and Motion Planning,* 2010